# EUROPÄISCHE PATENTSCHRIFT

(11) **EP 3 560 640 B1**
(45) Veröffentlichungstag und Bekanntmachung des Hinweises auf die Patenterteilung: **05.06.2024**
(21) Anmeldenummer: 19153983.2
(22) Anmeldetag: 28.01.2019
(51) Int. Cl.: B23B 31/26, B23Q 17/00, F15B 15/14

(54) **SPANNVORRICHTUNG**
CLAMPING DEVICE
DISPOSITIF DE SERRAGE

(30) Priorität: 26.04.2018 DE 102018110064
(43) Veröffentlichungstag der Anmeldung: 30.10.2019
(73) Patentinhaber: Ott-Jakob Spanntechnik GmbH, 87663 Lengenwang (DE)
(72) Erfinder: Greif, Josef, 87496 Friesenried (DE); Merz, Florian, 87668 Rieden (DE); Neugebauer, Gerd, 87600 Kaufbeuren (DE); Bechteler, Wolfgang, 87640 Ebenhofen (DE)
(74) Vertreter: Charrier Rapp & Liebau

(56) Entgegenhaltungen:
- DE-A1- 10 307 565
- DE-A1-102006 060 527
- DE-A1-102015 116 347
- DE-A1-102016 108 407
- JP-A- 2000 246 592
- JP-A- 2014 108 461
- US-A1- 2013 276 516

## Beschreibung

Die Erfindung betrifft eine Spannvorrichtung mit einer Löseeinrichtung nach dem Oberbegriff des Patentanspruchs 1. Eine derartige Spannvorrichtung ist aus der DE 10 2016 108 407 A1 bekannt.

Die drehbar gelagerten und motorisch angetriebenen Arbeitsspindeln von Werkzeugmaschinen oder Bearbeitungszentren weisen in der Regel einen integrierten Werkzeug- oder Werkstückspanner zum automatischen Spannen von Werkzeugen, Werkzeugaufnahmen oder Werkstücken auf. Derartige Werkzeug- oder Werkstückspanner enthalten üblicherweise einen mittels einer Zugstange betätigbaren Spannsatz, der durch Verschiebung der Zugstange zwischen einer Spannstellung zur Halterung der Bearbeitungswerkzeuge oder Werkzeughalter und einer Lösestellung zur Freigabe der Bearbeitungswerkzeuge oder Werkzeughalter bewegbar ist. Der Spannsatz enthält z.B. mehrere radial bewegliche Zangenelemente, durch welche die Werkzeugaufnahmen oder Werkzeuge in eine Arbeitsspindel eingezogen werden. Üblicherweise wird der Spannsatz durch eine um die Zugstange angeordnete Federanordnung in die Spannstellung eingezogen. Zum Lösen der Werkzeugaufnahmen oder Werkzeuge wird der Spannsatz durch eine i.a. hydraulisch betätigte Löseeinrichtung über die Zugstange entgegen der Kraft der Federanordnung so verschoben, dass der Spannsatz mit den Zangenelementen geöffnet wird und die Werkzeugaufnahmen oder Werkzeuge freigibt.

Aus der DE 10 2016 108 407 A1 ist eine gattungsgemäße Spannvorrichtung zum Spannen von Werkzeugen mit einer axial verschiebbaren Zugstange, einem über die Zugstange zwischen einer Spannstellung und einer Lösestellung bewegbaren Spannsatz, einer der Zugstange zugeordneten Federanordnung zur Erzeugung der Spann- bzw. Einzugskraft des Spannsatzes und einer Löseeinrichtung mit einem Gehäuse und einem innerhalb des Gehäuses zwischen einer Einfahrstellung und einer Lösestellung axial bewegbaren Kolben zur Betätigung des Spannsatzes über die Zugstange bekannt. In dem Gehäuse sind ein Kolbenabfragesensor zur Erfassung der Position des Kolbens relativ zum Gehäuse der Löseeinrichtung und ein Zugstangensensor zur Erfassung der Lage der Zugstange relativ zum Gehäuse angeordnet. Hierdurch kann der Spannzustand des Werkzeugspanners überwacht und eine fehlerhafte Werkzeugspannung infolge einer Fehlfunktion der hydraulischen Löseeinrichtung erkannt und eine Werkstückbearbeitung mit fehlerhaft gespanntem Werkzeug, die zu Ausschuss führen würde, vermieden werden.

In der DE 103 07 565 A1 ist ein Kraftspannfutter mit in einem Futterkörper radial verschiebbar geführten Spannbacken und einem in dem Futterkörper axial verschiebbar angeordneten Spannkolben zur Betätigung der Spannbacken offenbart. Zur Überwachung des in einem oder beiden dem Spannkolben zugeordneten Druckräumen herrschenden Druckmitteldrucks ist in dem Futterkörper ein Drucksensor eingebaut, der über Steuerkanäle an die Druckräume angeschlossen ist.

Aufgabe der Erfindung ist es, eine Spannvorrichtung mit einer Löseeinrichtung zu schaffen, bei der die Überwachung des Betriebszustandes weiter verbessert werden kann.

Diese Aufgabe wird durch eine Spannvorrichtung mit den Merkmalen des Anspruchs 1 gelöst. Zweckmäßige Weiterbildungen und vorteilhafte Ausgestaltungen der Erfindung sind in den Unteransprüchen angegeben.

Bei der erfindungsgemäßen Spannvorrichtung ist an dem Gehäuse der Löseeinrichtung mindestens ein Lösedrucksensor zur Erfassung eines Lösedrucks für die Verschiebung des Kolbens in die Lösestellung angeordnet. Über den Lösedruck können z.B. die Federkennlinie, Federkonstante oder Federarbeit einer Spannvorrichtung berechnet werden. Außerdem können über den Lösedruck Aussagen zur Ausstoßkraft und Reibungsverlusten getroffen werden. Dadurch können verbesserte Aussagen über den Betriebszustand der Löseeinheit sowie den Zustand des Spannsatzes oder der Federanordnung der Spannvorrichtung getroffen werden. Über den Lösedruck können außerdem Verunreinigungen an den Werkzeuganlageflächen erfasst sowie Verschleiß und anstehende Wartungsarbeiten erkannt werden. Durch Vergleich mit entsprechenden Referenzwerten ist ferner eine Bewertung der Einbausituation vor Ort möglich. An dem Gehäuse der Löseeinrichtung ist auch ein Rückstelldrucksensor zur Erfassung eines Rückstelldrucks für die Verschiebung des Kolbens in die Einfahrstellung angeordnet sein. Dadurch kann neben dem Lösevorgang auch der Spannvorgang überwacht werden. Über den Rückstelldruck kann indirekt auf die Federkraft der Spannvorrichtung geschlossen werden. Dadurch ist es möglich, bereits während des Spannvorgangs auf sich ändernde Spannkraftverhältnisse zu reagieren, wie diese beispielsweise durch Verschmutzung an den Werkzeuganlageflächen durch Späne oder dgl. auftreten können.

Der Lösedrucksensor kann zweckmäßigerweise ein Drucksensor zur Erfassung des Drucks in einer Druckkammer für die Verschiebung des Kolbes in die Lösestellung sein. Der Lösedruck kann aber auch über Dehnungsmessstreifen erfasst werden, die z.B. an dem Kolben oder dem Gehäuse angeordnet sein können und die Kraft zwischen dem Kolben und Gehäuse bei der Verschiebung des Kolbens in die Lösestellung erfassen.

Der Druckraum für die Verschiebung des Kolbes in die Lösestellung kann z.B. zwischen einer hinteren Stirnfläche des Kolbens und einer inneren Fläche eines im Gehäuse angeordneten Einsatzes begrenzt werden. Der Lösedrucksensor kann an einer zu diesem Druckraum führenden Radialbohrung im Gehäuse angeordnet sein.

Auch der Rückstelldrucksensor kann zweckmäßigerweise ein Drucksensor zur Erfassung des Drucks in einer Druckkammer für die zur Erfassung des Drucks in einer Druckkammer für die Verschiebung des Kolbes in die Einfahrstellung sein.

Der Druckraum für die Verschiebung des Kolbes in die Einfahrstellung kann z.B. zwischen einer vorderen Ringfläche des Kolbens und einer inneren Ringfläche im Gehäuse begrenzt werden. Der Rückstelldrucksensor kann an einer zu diesem Druckraum führenden Radialbohrung im Gehäuse angeordnet sein.

In einer weiteren vorteilhaften Ausgestaltung können in dem Gehäuse der Löseeinheit außerdem ein Kolbenabfragesensor und/oder ein Zugstangensensor angeordnet sein. Dadurch kann auch eine Überwachung des Druckverlaufs über den Hub erfolgen.

Bevorzugt sind der Kolbenabfragesensor und der Zugstangensensor auf einem in dem Gehäuse angeordneten Trägerteil angeordnet. Damit sind diese Sensoren zu einer kompakten Baugruppe zusammengefasst, auf der auch ihre Zuleitungen verlegt werden können, und es erübrigt sich, an verschiedenen Orten in der Arbeitsspindel einer Werkzeugmaschine Raum für den Einbau der Sensoren vorzusehen. Ferner kann das Trägerteil mit dem Kolbenabfragesensor und dem Zugstangensensor als Baueinheit in der Löseeinrichtung montiert und aus dieser demontiert werden, wodurch sich die Montage der Arbeitsspindel und die Reparatur in Falle eines Defekts an einem Sensor vereinfacht.

In dem Gehäuse ist bevorzugt auch ein Leckagesensor zur Detektion einer abnormal erhöhten Leckage von Kühlschmierflüssigkeit, die der Zugstange über eine in die Löseeinrichtung eingebaute Drehdurchführung zugeführt wird, angeordnet. Durch die Zusammenfassung von mehreren Sensoren an der Löseeinrichtung kann eine umfassende Überwachung ermöglicht werden. Zweckmäßig ist der Leckagesensor in einer in einen Sammelkanal mündenden Radialbohrung des Gehäuses angeordnet. Als Ausführungsform des Leckagesensors eignet sich insbesondere ein kalorimetrischer Durchflusssensor.

Weitere Besonderheiten und Vorzüge ergeben sich aus der folgenden Beschreibung eines bevorzugten Ausführungsbeispiels anhand der Zeichnung. Es zeigen:
- Figur 1: eine Spannvorrichtung mit einer Löseeinrichtung und einer Drehdurchführung in einem Längsschnitt;
- Figur 2: eine Löseeinrichtung in einem Längsschnitt und
- Figur 3: die Löseeinrichtung von Figur 2 in einer Rückansicht.

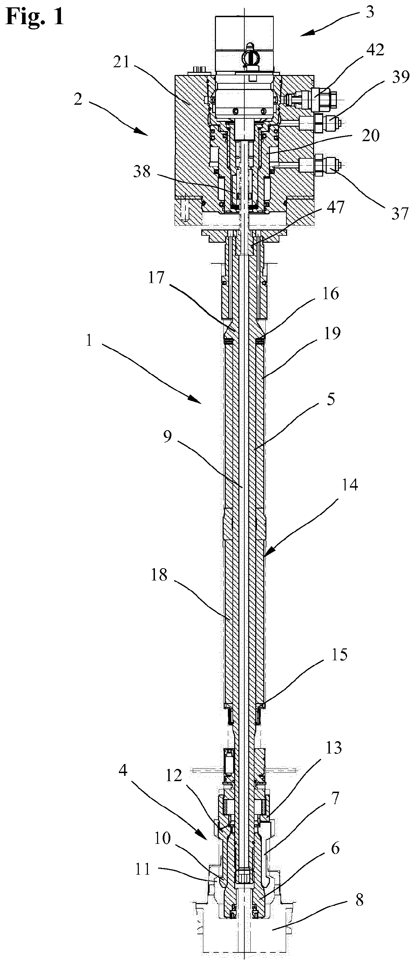

In Figur 1 ist ein als Werkzeugspanner für den Einbau in eine drehbare Arbeitsspindel einer Werkzeugmaschine konzipierte Spannvorrichtung 1 mit einer Löseeinrichtung 2 und einer sogenannten Drehdurchführung 3 für die Zuführung eines Kühlschmiermittels oder eines anderen Arbeitsfluids gezeigt. Die Spannvorrichtung 1 enthält einen Spannsatz 4, der über eine axial verschiebbare Zugstange 5 betätigbar ist. Bei der gezeigten Ausführung weist der Spannsatz 4 einen Spannkonus 6 und mehrere um den Spannkonus 6 angeordnete Zangenelemente 7 zur Halterung eines Werkzeugs oder einer Werkzeugaufnahme 8 auf.

Der Spannkonus 6 des Spannsatzes 4 ist an dem zur Werkzeugaufnahme 8 weisenden vorderen Ende der Zugstange 5 befestigt. Durch axiale Verschiebung des Spannkonus 6 über die Zugstange 5 sind die Zangenelemente 7 zur Klemmung bzw. Freigabe der Werkzeugaufnahme 8 radial bewegbar. Der hier in Art einer Spannzange ausgeführte Spannsatz 4 kann aber auch z.B. mit radial beweglichen Kugeln oder auf andere Weise ausgebildet sein. Die Zugstange 5 weist in der gezeigten Ausführung eine Durchgangsöffnung 9 für die Zuführung des über die Drehdurchführung 3 eingeleiteten Arbeits- und/oder Reinigungsfluids zur Werkzeugaufnahme 8 auf.

Die Zangenelemente 7 des Spannsatzes 4 greifen mit ihren äußeren Enden 10 in eine Ringnut 11 der Werkzeugaufnahme 8 ein. Mit ihren inneren Enden 12 sind die Zangenelemente 7 in einem hülsenförmigen Abstandshalter 13 geführt. Die Zugstange 5 wird durch eine um diese konzentrisch angeordnete Federanordnung 14 in eine zurückgezogene Spannstellung vorgespannt. Die Federanordnung 14 ist an der einen Seite an einem innerhalb der Arbeitsspindel abgestützten buchsenförmigen Anlageelement 15 und an der anderen Seite an einer Ringfläche 16 eines verbreiterten hinteren Teils 17 der Zugstange 5 abgestützt. Bei der gezeigten Ausführung wird die Federanordnung 14 durch zwei hintereinander geschaltete Federelemente 18 und 19 gebildet. Die Federelemente 18 und 19 können als Tellerfederpaket, als Knickstabfeder oder in einer anderen geeigneten Weise ausgeführt sein.

An dem von der Werkzeugaufnahme 8 abgewandten hinteren Ende der Zugstange 5 ist die Löseeinrichtung 2 angeordnet. Diese enthält einen innerhalb eines Gehäuses verschiebbar geführten und über ein Druckfluid bewegbaren Kolben 20, über den die Zugstange 5 entgegen der Kraft der Federanordnung 14 in eine Lösestellung gedrückt werden kann. Wenn die Zugstange 5 über den Kolben 20 der Löseinheit 2 durch entsprechende Zuführung eines Hydraulikfluids zur Löseeinrichtung 2 entgegen der Kraft der Federanordnung 14 in Richtung der Werkzeugaufnahme 8 geschoben wird, werden die Zangenelemente 7 radial nach innen verschoben und geben das Werkzeug bzw. die Werkzeugaufnahme 8 zur Entnahme aus der Arbeitsspindel frei. Wird dagegen der Kolben 20 durch entsprechende Ansteuerung der Löseeinrichtung 2 eingezogen, wird auch die Zugstange 5 durch die Kraft der Federanordnung 14 wieder eingezogen, wodurch die Zangenelemente 7 über den Spannkonus 6 radial nach außen gedrückt werden und das Werkzeug bzw. die Werkzeugaufnahme 8 in die Arbeitsspindel einziehen und spannen. Über die Drehdurchführung 3 kann Kühlschmiermittel oder ein anderes Arbeitsfluid in die während der Bearbeitung rotierende Zugstange 5 geleitet und über die Durchgangsöffnung 9 zu der Werkzeugaufnahme 8 geführt werden.

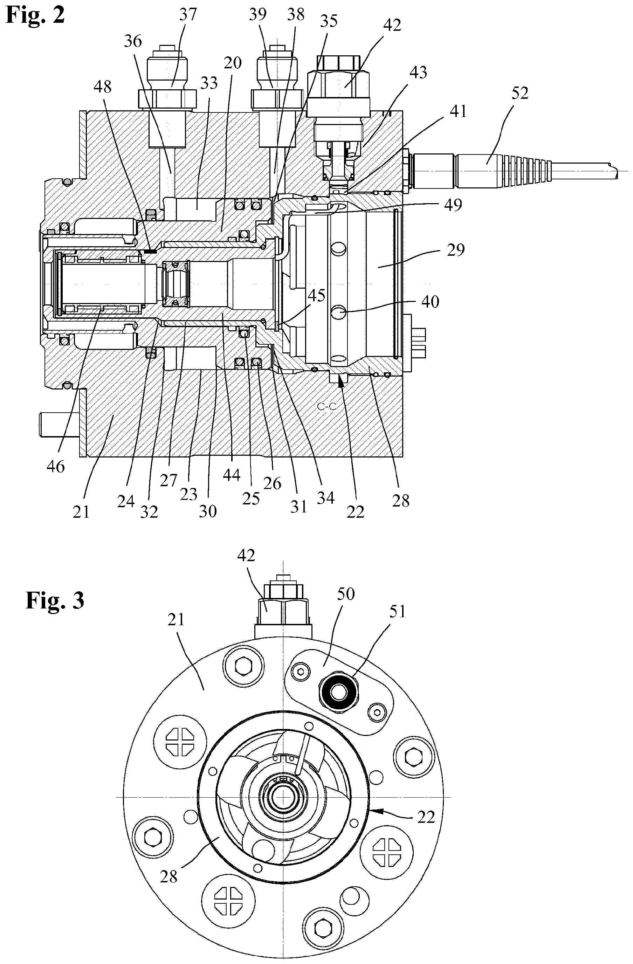

In den Figuren 2 und 3 ist eine erfindungsgemäße Löseeinrichtung 2 in einem Längsschnitt und einer Rückansicht gezeigt. Die Löseeinrichtung 2 enthält ein hohlzylindrisches Gehäuse 21 und einen in das Gehäuse 21 eingeschraubten buchsenförmigen Einsatz 22, die einen nach außen abgedichteten Innenraum 23 zur Aufnahme des mit einem Durchgang 24 versehenen Kolbens 20 begrenzen. In dem Innenraum 23 ist der über innere und äußere Dichtelemente 25 und 26 gegenüber dem Gehäuse 21 und dem Einsatz 22 abgedichtete Kolben 20 zwischen einer eingezogenen Einfahrstellung und einer ausgefahrenen Lösestellung axial verschiebbar geführt und kann über entsprechende Zuführung eines Hydraulikfluids oder eines anderen Druckmittels verschoben werden. Der Einsatz 22 weist einen in den Durchgang 24 des Kolbens 20 ragenden schlankeren Teil 27 und einen im Durchmesser erweiterten Teil 28 mit einer inneren Aufnahmeöffnung 29 für die Drehdurchführung 3 auf.

Der im Innenraum 23 angeordnete Kolben 20 enthält an seinem dem Einsatz 22 zugewandten hinteren Ende einen Ringbund mit einer vorderen Ringfläche 30 und einer hinteren abgestuften Stirnfläche 31. Zwischen der vorderen Ringfläche 30 des Kolbens 20 und einer inneren Ringfläche 32 im Innenraum 23 des Gehäuses 21 wird ein erster Druckraum 33 zur Verschiebung des Kolbens nach hinten in die in Figur 2 gezeigte Einfahrstellung begrenzt. Zwischen der hinteren abgestuften Stirnfläche 31 des Kolbens 20 und einer inneren Fläche 34 am Übergang von erweiterten Teil 28 zum schlankeren Teil 27 des Einsatzes 22 wird ein zweiter Druckraum 35 zur Verschiebung des Kolbens in eine ausgefahrene Lösestellung begrenzt.

An einer zum ersten Druckraum 33 führenden ersten Radialbohrung 36 im Gehäuse 21 ist ein Rückstelldrucksensor 37 zur Erfassung des Drucks innerhalb des Druckraums 33 vorgesehen. An einer zum zweiten Druckraum 35 führenden zweiten Radialbohrung 38 im Gehäuse 21 ist ein Lösedrucksensor 39 zur Erfassung des Drucks innerhalb des Druckraums 35 angeordnet.

Der hülsenförmige Einsatz 22 enthält im Bereich der Aufnahme 29 für die Drehdurchführung 3 mehrere über den Umfang verteilte radiale Durchgangsöffnungen 40, die in einen ringnutförmigen Sammelkanal 41 an der Innenseite des hohlzylindrischen Gehäuses 21 münden. Der Sammelkanal 41 dient als Sammelraum für ein an der Drehdurchführung 3 austretendes Leckagefluid und steht in Verbindung mit einem in Figur 2 gezeigten Leckagesensor 42, der in einer in den Sammelkanal 41 mündenden Radialbohrung 43 an der Außenseite des Gehäuses 21 eingeschraubt ist. In den schlankeren Teil 27 des Einsatzes 20 ist ein hülsenförmiges Trägerteil 44 für eine Sensorik eingesteckt und durch einen Sicherungsring 45 axial gesichert.

An dem hülsenförmigen Trägerteil 44 ist ein Zugstangensensor 46 zur Erfassung der Lage der durch die Löseeinrichtung 2 betätigbaren Zugstange 5 relativ zum Gehäuse 21 angeordnet. Die Erfassung der Position der Zugstange 5 kann z.B. über die Erfassung der Position eines in Figur 1 gezeigten Übergaberohrs 47 erfolgen, das in das Ende der Zugstange 5 eingeschraubt ist und sich durch das hülsenförmige Trägerteil 44 bis zur Drehdurchführung 3 erstreckt. Bei dem Zugstangensensor 46 kann es sich z.B. um einen induktiven Wegsensor handeln, der die Position des mit der Zugstange 5 fest verbundenen Übergaberohrs 47 erfasst.

Auf dem hülsenförmigen Trägerteil 38 kann außerdem ein Kolbenabfragesensor 48 zur Erfassung der Position des Kolbens 20 relativ zum Gehäuse 21 angeordnet sein. Bei dem Kolbenabfragesensor 48 kann es sich z.B. um einen induktiven oder kapazitiven Näherungssensor handeln, der eine Verschiebung des Kolbens 20 gegenüber dem Gehäuse 21 erfasst.

Durch die gemeinsame Auswertung der Ausgangssignale des Zugstangensensors 46 und des Kolbenabfragesensors 48 kann die Zuverlässigkeit der Überwachung des Spannzustandes des Werkzeugspanners 1 nicht nur insofern erhöht werden, als die Fehlersituation in Gestalt des Nichterreichens der Spannstellung durch die Zugstange 5 trotz Erreichens der Spannstellung durch den Kolben 20 erkannt werden kann, sondern es können auch Defekte an den beiden Sensoren erkannt werden, indem die Kombination ihrer Signale auf Plausibilität überwacht wird. So ist es beispielsweise ein Indiz für einen Defekt an mindestens einem der beiden Sensoren 46 und 48, wenn der Kolbenabfragesensor 48 anzeigt, dass sich der Kolben 20 nicht in seiner hinteren Endstellung befindet, während der Zugstangensensor 46 anzeigt, dass sich die Zugstange 5 in ihrer hinteren Endstellung befindet. Bei Erkennung einer unplausiblen Signalkombination wie der genannten gibt die Auswerteeinheit ein entsprechendes Warnsignal an die Steuerung der Werkzeugmaschine ab.

Der Aufbau und die Funktionsweise des Zugstangensensors 46 und des Kolbenabfragesensors 48 an einer Löseeinrichtung ist in der DE 10 2016 108 407 A1 ausführlich beschrieben. Zu den Einzelheiten des Zugstangensensors 46 und Kolbenabfragesensors 48 wird auf diese Druckschrift daher ausdrücklich Bezug genommen.

Zur Verschiebung des Kolbens 20 in die ausgefahrene Lösestellung wird der Druckraum 35 der Löseinrichtung 2 über die Radialbohrung 38 mit einem Hydraulikfluid oder einem anderen Druckmittel beaufschlagt. Über den Lösedrucksensor 39 kann dabei der Lösedruck ermittelt werden, der sich während der durch den Kolben 20 über die Zugstange 5 entgegen der Kraft der Federanordnung bewirkten Verschiebung des Spannsatzes 4 in die Lösestellung ergibt. Zur Bewegung des Spannsatzes 4 in eine Spannstellung wird der Druckraum 35 drucklos gemacht. Über die eine um die Zugstange 5 angeordnete Federanordnung 14 kann dann der der Spannsatz 4 in die Spannstellung eingezogen werden. Durch Druckbeaufschlagung des Druckraums 33 kann der Kolben 20 in die in Figur 2 dargestellte Einfahrstellung zurückgestellt werden. Über den Rückstelldrucksensor 37 kann der hierbei wirkende Rückstelldruck erfasst werden.

Die auf dem Trägerteil 44 angeordnete Sensorik ist über eine in Figur 2 erkennbare Leitung 49 mit einer innerhalb des Gehäuses 21 angeordneten elektronischen Auswerteeinheit verbunden. Die Auswerteinheit ist hinter einer in Figur 3 gezeigten Abdeckung 50 angeordnet und enthält eine elektronische Schnittstelle 51 zum Anschluss eines in Figur 2 erkennbaren Steckers 52 eines zu einer übergeordneten Steuereinheit der Werkzeugmaschine führenden Kabels auf. Auch die beiden Drucksensoren 37 und 39 sowie der Leckagesensor 42 können an die Auswerteeinheit angeschlossen sein.

### Bezugszeichenliste

- 1: Spannvorrichtung
- 2: Löseeinrichtung
- 3: Drehdurchführung
- 4: Spannsatz
- 5: Zugstange
- 6: Spannkonus
- 7: Zangenelemente
- 8: Werkzeugaufnahme
- 9: Durchgangsöffnung
- 10: Äußeres Ende des Zangenelements
- 11: Ringnut
- 12: Inneres Ende des Zangenelements
- 13: Abstandshalter
- 14: Federanordnung
- 15: Anlageelement
- 16: Ringfläche
- 17: Hinterer Teil der Zugstange
- 18: Federelement
- 19: Federelement
- 20: Kolben
- 21: Gehäuse
- 22: Einsatz
- 23: Innenraum
- 24: Durchgang
- 25: Inneres Dichtelement
- 26: Äußeres Dichtelement
- 27: Schlankerer Teil des Einsatzes
- 28: Erweiterter Teil des Einsatzes
- 29: Aufnahmeöffnung
- 30: Vordere Ringfläche
- 31: Hintere Stirnfläche
- 32: Innere Ringfläche
- 33: Erster Druckraum
- 34: Innere Fläche
- 35: Zweiter Druckraum
- 36: Erste Radialbohrung
- 37: Rückstelldrucksensor
- 38: Zweite Radialbohrung
- 39: Lösedrucksensor
- 40: Durchgangsöffnung
- 41: Sammelkanal
- 42: Leckagesensor
- 43: Radialbohrung
- 44: Trägerteil
- 45: Sicherungsring
- 46: Zugstangensensor
- 47: Übergaberohr
- 48: Kolbenabfragesensor
- 49: Leitung
- 50: Abdeckung
- 51: Schnittstelle
- 52: Stecker

## Patentansprüche

1. Spannvorrichtung zum Spannen von Werkzeugen oder Werkstücken mit einer axial verschiebbaren Zugstange (5), einem über die Zugstange (5) zwischen einer Spannstellung und einer Lösestellung bewegbaren Spannsatz (4), einer der Zugstange (5) zugeordneten Federanordnung (14) zur Erzeugung der Spann- bzw. Einzugskraft des Spannsatzes (4) und einer Löseeinrichtung (2), durch welche der Spannsatz (4) über die Zugstange (5) entgegen der Kraft der Federanordnung (14) in die Lösestellung bewegbar ist, wobei die Löseeinrichtung (2) ein Gehäuse (21) und einen innerhalb des Gehäuses (21) zwischen einer Einfahrstellung und einer Lösestellung axial bewegbaren Kolben (20) zur Betätigung des Spannsatzes (4) über die Zugstange (5) enthält und wobei in dem Gehäuse (21) ein Kolbenabfragesensor (48) und ein Zugstangensensor (46) angeordnet sind, **dadurch gekennzeichnet, dass** an dem Gehäuse (21) mindestens ein Lösedrucksensor (39) zur Erfassung eines Lösedrucks für die Verschiebung des Kolbens (20) in die Lösestellung und ein Rückstelldrucksensor (37) zur Erfassung eines Rückstelldrucks für die Verschiebung des Kolbens (20) in die Einfahrstellung angeordnet sind.

2. Spannvorrichtung nach Anspruch 1, **dadurch gekennzeichnet, dass** der Lösedrucksensor (39) ein Drucksensor zur Erfassung des Drucks in einem Druckraum (35) für die Verschiebung des Kolbes (29) in die Lösestellung ist.

3. Spannvorrichtung nach Anspruch 2, **dadurch gekennzeichnet, dass** der Druckraum (35) für die Verschiebung des Kolbes (29) in die Lösestellung zwischen einer hinteren Stirnfläche (31) des Kolbens (20) und einer inneren Fläche (34) eines im Gehäuse (21) angeordneten Einsatzes (22) begrenzt wird.

4. Spannvorrichtung nach Anspruch 3, **dadurch gekennzeichnet, dass** der Lösedrucksensor (39) an einer zum Druckraum (35) führenden Radialbohrung (38) im Gehäuse (21) angeordnet ist.

5. Spannvorrichtung nach einem der Ansprüche 1 bis 4, **dadurch gekennzeichnet, dass** der Rückstelldrucksensor (39) ein Drucksensor zur Erfassung des Drucks in einem Druckraum (33) für die Verschiebung des Kolbens (20) in die Einfahrstellung ist.

6. Spannvorrichtung nach Anspruch 5, **dadurch gekennzeichnet, dass** der Druckraum (33) für die Verschiebung des Kolbes (29) in die Einfahrstellung zwischen einer vorderen Ringfläche (30) des Kolbens (20) und einer inneren Ringfläche (32) im Gehäuse (21) begrenzt wird.

7. Spannvorrichtung nach Anspruch 6, **dadurch gekennzeichnet, dass** der Rückstelldrucksensor (39) an einer zum Druckraum (33) führenden Radialbohrung (36) im Gehäuse (21) angeordnet ist.

8. Spannvorrichtung nach einem der Ansprüche 1 bis 7, **dadurch gekennzeichnet, dass** der Kolbenabfragesensor (48) und der Zugstangensensor (46) auf einem in dem Gehäuse (19) angeordneten Trägerteil (44) angeordnet sind.

9. Spannvorrichtung nach einem der Ansprüche 1 bis 8, **dadurch gekennzeichnet, dass** in dem Gehäuse (21) ein Leckagesensor (30) angeordnet ist.

## Claims

1. Clamping device for clamping tools or workpieces with an axially displaceable pull rod (5), a clamping set (4) movable via the pull rod (5) between a clamping position and a release position, a spring arrangement (14) associated with the pull rod (5) for generating the clamping or pull-in force of the clamping set (4), and a release device (2) by means of which the clamping set (4) can be moved into the release position via the pull rod (5) counter to the force of the spring arrangement (14), wherein the release device (2) comprises a housing (21) and a piston (20) axially movable within the housing (21) between a retracted position and a release position for actuating the clamping set (4) via the pull rod (5), and wherein a piston request sensor (48) and a pull rod sensor (46) are arranged in the housing (21), **characterised in that** at least one release pressure sensor (39) for detecting a release pressure for the displacement of the piston (20) into the release position and a reset pressure sensor (37) for detecting a reset pressure for the displacement of the piston (20) into the retracted position are arranged on the housing (21).

2. Clamping device according to claim 1, **characterised in that** the release pressure sensor (39) is a pressure sensor for detecting the pressure in a pressure chamber (35) for the displacement of the piston (29) into the release position.

3. Clamping device according to claim 2, **characterised in that** the pressure chamber (35) for the displacement of the piston (29) into the release position is delimited between a rear end face (31) of the piston (20) and an inner face (34) of an insert (22) arranged in the housing (21).

4. Clamping device according to claim 3, **characterised in that** the release pressure sensor (39) is arranged on a radial bore (38) leading to the pressure chamber (35) in the housing (21).

5. Clamping device according to one of claims 1 to 4, **characterised in that** the reset pressure sensor (39) is a pressure sensor for detecting the pressure in a pressure chamber (33) for the displacement of the piston (20) into the retracted position.

6. Clamping device according to claim 5, **characterised in that** the pressure chamber (33) for the displacement of the piston (29) into the retracted position is delimited between a front annular surface (30) of the piston (20) and an inner annular surface (32) in the housing (21).

7. Clamping device according to claim 6, **characterised in that** the reset pressure sensor (39) is arranged on a radial bore (36) leading to the pressure chamber (33) in the housing (21).

8. Clamping device according to one of claims 1 to 7, **characterised in that** the piston request sensor (48) and the pull rod sensor (46) are arranged on a carrier part (44) arranged in the housing (19).

9. Clamping device according to one of claims 1 to 8, **characterised in that** a leakage sensor (30) is arranged in the housing (21).

## Revendications

1. Dispositif de serrage destiné à serrer des outils ou des pièces à usiner avec une barre de traction (5) axialement coulissante, un bloc de serrage (4) déplaçable via la barre de traction (5) entre une position de serrage et une position de desserrage, un agencement de ressort (14) attribué à la barre de traction (5) pour la production de la force de serrage ou de rentrage du bloc de serrage (4) et un équipement de desserrage (2) par lequel le bloc de serrage (4) peut être déplacé à l'encontre de la force de l'agencement de ressort (14) et via la barre de traction (5) jusque dans la position de desserrage, dans lequel l'équipement de desserrage (2) contient un logement (21) et un piston (20) axialement déplaçable à l'intérieur du logement (21) entre une position d'entrée et une position de desserrage pour l'actionnement du bloc de serrage (4) via la barre de traction (5) et dans lequel un capteur de lecture de piston (48) et un capteur de barres de traction (46) sont agencés dans le logement (21), **caractérisé en ce que** contre le logement (21) sont agencés au moins un capteur de pression de desserrage (39) pour la saisie d'une pression de desserrage pour le coulissement du piston (20) jusque dans la position de desserrage et un capteur de pression de rappel (37) pour la saisie d'une pression de rappel pour le coulissement du piston (20) jusque dans la position d'entrée.

2. Dispositif de serrage selon la revendication 1, **caractérisé en ce que** le capteur de pression de desserrage (39) est un capteur de pression pour la saisie de la pression dans une chambre de pression (35) pour le coulissement du piston (29) jusque dans la position de desserrage.

3. Dispositif de serrage selon la revendication 2, **caractérisé en ce que** la chambre de pression (35) pour le coulissement du piston (29) jusque dans la position de desserrage est délimitée entre une surface frontale (31) arrière du piston (20) et une surface intérieure (34) d'un insert (22) agencé dans le logement (21).

4. Dispositif de serrage selon la revendication 3, **caractérisé en ce que** le capteur de pression de desserrage (39) est agencé dans le logement (21) contre un alésage radial (38) menant vers la chambre de pression (35).

5. Dispositif de serrage selon l'une des revendications 1 à 4, **caractérisé en ce que** le capteur de pression de rappel (39) est un capteur de pression pour la saisie de la pression dans une chambre de pression (33) pour le coulissement du piston (20) jusque dans la position d'entrée.

6. Dispositif de serrage selon la revendication 5, **caractérisé en ce que** la chambre de pression (33) pour le coulissement du piston (29) jusque dans la position d'entrée est délimitée entre une surface annulaire (30) avant du piston (20) et une surface annulaire (32) intérieure dans le logement (21).

7. Dispositif de serrage selon la revendication 6, **caractérisé en ce que** le capteur de pression de rappel (39) est agencé dans le logement (21) contre un alésage radial (36) menant vers la chambre de pression (33).

8. Dispositif de serrage selon l'une des revendications 1 à 7, **caractérisé en ce que** le capteur de lecture de piston (48) et le capteur de barres de traction (46) sont agencés sur une partie de support (44) agencée dans le logement (19).

9. Dispositif de serrage selon l'une des revendications 1 à 8, **caractérisé en ce qu'**un capteur de fuite (30) est agencé dans le logement (21).
